# EUROPÄISCHE PATENTSCHRIFT

(11) **EP 1 234 644 B1**
(45) Veröffentlichungstag und Bekanntmachung des Hinweises auf die Patenterteilung: **05.10.2005**
(21) Anmeldenummer: 02002730.6
(22) Anmeldetag: 07.02.2002
(51) Int. Cl.: B26F 1/40

(54) **Stanzstation zum Austrennen von Teilen aus thermoplastischem Kunststoff**
Cutting press for cutting elements out of thermoformable plastics
Presse de découpage pour séparer des éléments à partir d'un matériau plastique thermoformable

(30) Priorität: 24.02.2001 DE 10109111
(43) Veröffentlichungstag der Anmeldung: 28.08.2002
(73) Patentinhaber: Adolf Illig Maschinenbau GmbH & Co. KG, 74081 Heilbronn (DE)
(72) Erfinder: Karbach, Helmut, 74076 Heilbronn (DE)

(56) Entgegenhaltungen:
- EP-A- 0 322 697
- DE-A- 3 118 529
- GB-A- 2 106 444
- US-A- 2 220 056

## Beschreibung

Die Erfindung betrifft eine Stanzstation zum Austrennen von Teilen aus thermoplastischem Kunststoff, die in einer Thermoformmaschine in eine thermoplastische Kunststofffolie eingeformt werden.

Eine Stanzstation, integriert in eine Thermoformmaschine, ist aus der DE 31 18 529 A1 bekannt. Diese Schrift zeigt eine Ausbildung einer Stanzstation in der Weise, dass das Stanzwerkzeug an einem höhenbeweglichen Tisch angeordnet ist, der an ortsfesten Führungssäulen geführt und über einen Kniehebelantrieb verschoben wird. Die Führungssäulen sind mit einer Querbrücke verbunden, an der der Kniehebelantrieb angelenkt ist. Auf einem ortsfesten Tisch wird das auszustanzende Folienband bereit gehalten, er dient als Stanzgegenlage.

GB 2 106 444 A zeigt eine Stanzstation mit einem höhenverschiebbaren, an Führungssäulen geführten Tisch zur Aufnahme eines Stanzwerkzeuges und einer die Führungssäulen an deren oberen Ende über eine Schraubverbindung verbindenden Querbrücke mit daran befestigtem Antrieb zur Verschiebung des Tisches, sowie mit einer Verstelleinrichtung zwischen Querbrücke und jeder Führungssäule zur Veränderung der Lage beider Teile zueinander, bei der zwischen der Querbrücke und mindestens zwei Führungssäulen Federelemente angeordnet sind, wobei das obere Ende einer jeden Führungssäule (13) einen Gewindezapfen aufweist, auf dem eine Gewindebuchse mit einem Bund sitzt

Wenn das Stanzwerkzeug aus einem Bandstahlschnitt besteht und über einen Kniehebelantrieb mit definierter Strecklage bewegt wird, ist eine genaue Abstimmung der Endlage des Stanzwerkzeuges erforderlich, um eine Beschädigung der Schneidkante zu vermeiden. Dazu ist es bekannt, die Verbindung Führungssäulen/Querbrücke nicht, wie in der Veröffentlichung dargestellt, als starre Schraubverbindung auszubilden, sondem über verdrehbare Gewindebuchsen mit Innengewinde, die mit einem auf den Führungssäulen angebrachten Außengewinde zusammenwirken. Über einen Haltering ist jede mit einem Bund versehene Gewindebuchse gehalten. Durch synchrones Verdrehen - von Hand oder motorisch - aller Gewindebuchsen wird die Lage der Querbrücke zu den Führungssäulen verändert. In der Praxis wird die genaue Einstellung durch Versuche ermittelt, in dem so lange zugestellt wird, bis gerade ein gutes Durchtrennen der Folienbahn an der Schnittstelle eintritt. Ein zu starkes Zustellen führt unweigerlich zu einer Beschädigung der Schneidkanten.

Bei dieser Verstelleinrichtung besteht das Problem, dass die Gewindeflanken zwischen Gewindebuchse und Außengewinde auf den Führungssäulen ein gewisses Spiel aufweisen müssen, um eine Verstellung vornehmen zu können, ohne dass die Gewindeflanken beschädigt werden. Dies ist vergleichbar mit einer Mutter, die auf einer Schraube verdreht wird. Ein gewisses axiales Spiel ist zum leichten Verdrehen erforderlich.

Ein gewisses Spiel ist bauartbedingt auch zwischen dem Bund der Gewindebuchsen und dem Haltering erforderlich, um diese Gewindebuchsen leicht verdrehen zu können.

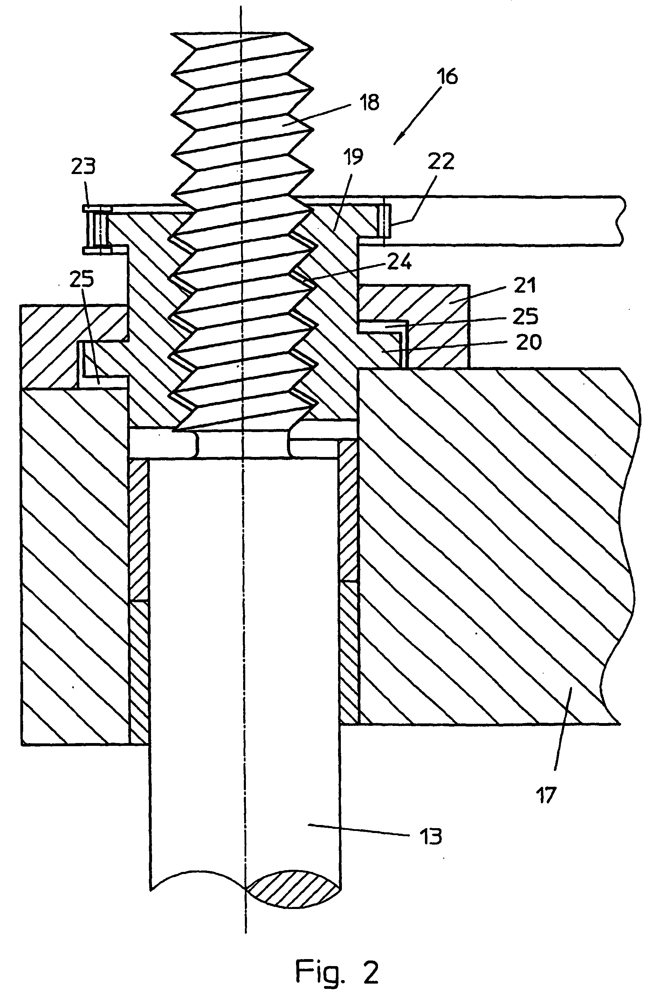

Die Auswirkungen dieses erforderlichen Gewindespiels bzw. des Spiels zwischen Gewindebuchse und Haltering führen dazu, dass kein sauberer, glatter Schnitt erfolgt, sondern eine in Fachkreisen "Engelhaarbildung" genannte Erscheinung eintritt. Dabei handelt es sich um ganz feine Streifen von Kunststoffmaterial, die beim Stanzen anfallen. Auch feine staubartige Partikel treten beim Stanzen auf. Diese Partikel und Streifen bleiben oft am Formteil hängen, unter anderem bedingt durch geringste elektrostatische Aufladungen, mit denen bei Kunststoff immer zu rechnen ist. Dies ist in vielen Fällen nicht hinnehmbar, z. B. wenn die Formteile für sterile Verpackungen Verwendung finden sollen. Nähere Ausführungen hierzu erfolgen später anhand der Figur 2.

Zur Vermeidung dieses Wechsels des Gewindespiels und Spiels an den Gewindebuchsen ist es zwar bekannt, über angetriebene Einrichtungen die Gewindebuchsen mit dem Gewindezapfen der Führungssäulen zu verspannen. Diese Einrichtungen sind aber sehr aufwendig.

Der Erfindung liegt die Aufgabe zugrunde, eine Stanzstation auf einfache Weise so zu gestalten, dass die Bildung von feinen Kunststoffstreifen und staubartigen Partikeln verhindert wird. Gleichzeitig soll der Verschleiß der Schneidkanten reduziert und damit die Standzeit des Stanzwerkzeuges und der Stanzgegenlage verlängert werden. Das Drehmoment zur Verstellung der Querbrücke zu den Führungssäulen und der Verschleiß des Verstellgewindes sollten verringert werden.

Zur Lösung der Aufgabe werden die Merkmale des Anspruchs 1 vorgeschlagen.

Die Stanzstation ist anhand der schematischen Zeichnungen näher beschrieben. Es zeigen:
- Figur 1: eine Darstellung einer Thermoformmaschine mit integrierter Stanzstation.
- Figur 2: einen Querschnitt durch eine Verstelleinrichtung gemäß des Standes der Technik, vergrößert dargestellt.
- Figur 3: einen Querschnitt durch die Querbrücke der Stanzstation gemäß einer ersten Ausführungsform der Erfindung.
- Figur 4: einen Querschnitt durch die Querbrücke der Stanzstation gemäß einer zweiten Ausführungsform der Erfindung sowie einer Varianten.

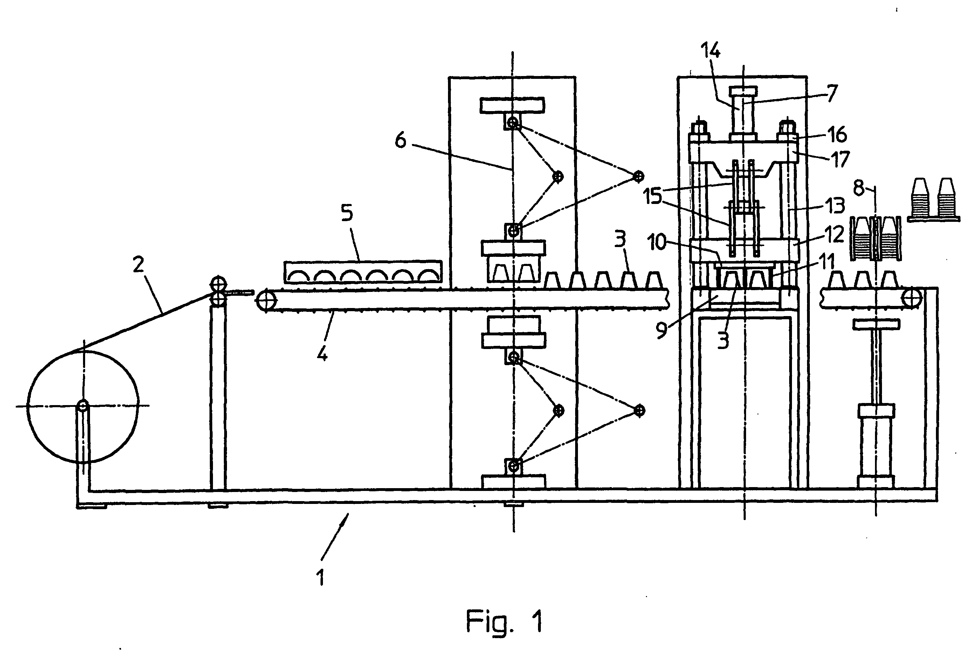

Figur 1 zeigt eine Thermoformmaschine 1 zum Verformen einer Folienbahn 2 zu Formteilen 3. Dazu wird die Folienbahn 2 von einer Transporteinrichtung 4 taktweise einer Heizung 5, der Formstation 6, der Stanzstation 7 und ggf. einer Stapeleinrichtung 8 zugeführt.

Die Erfindung bezieht sich auf die Stanzstation 7, die einen unteren Stanztisch 9 aufweist, der starr wie dargestellt oder höhenbeweglich ausgebildet ist. Auf ihm liegt eine nicht dargestellte Stanzauflage aus Blech oder Pappe, auf dieser liegt die Folienbahn 2 beim Stanzen auf. Zum Ausstanzen der Teile 3 dient ein Stanzwerkzeug 10, das eine Schnittlinie 11 aufweist und an einem höhenbeweglichen Tisch 12 befestigt ist. Dieser Tisch 12 ist an ortsfesten Führungssäulen 13 über einen an der Querbrücke 17 befestigten Antrieb 14 höhenverschiebbar, wobei dieser vorzugsweise in Form eines Kniehebelantriebes 15 zur Erzielung hoher Stanzkräfte ausgebildet ist.

Das Stanzen mittels eines mit einer Schnittlinie 11 versehenen Stanzwerkzeuges 10 erfordert eine exakte Einstellung der Endlage des Tisches 12, um eine Beschädigung der Schnittlinie 11 durch einen zu hohen Kraftaufbau nach dem Austrennen der Teile 3 zu vermeiden. Zur Anpassung an unterschiedliche Höhen des Stanzwerkzeuges 10 ist deshalb eine Verstelleinrichtung 16 so vorgesehen, dass die Lage der Querbrücke 17 zu den Führungssäulen 13 verstellt werden kann. Hierzu weist das obere Ende einer jeden Führungssäule 13 einen Gewindezapfen 18 auf, auf dem eine Gewindebuchse 19 sitzt. An der Gewindebuchse 19 ist ein Bund 20 vorgesehen, der sich einerseits auf der Querbrücke 17 abstützt, andererseits von einem an der Querbrücke 17 montierten Haltering 21 abgestützt wird. Ferner ist die Gewindebuchse 19 mit einer Verzahnung 22 für eine Verstellkette 23 versehen, so dass alle Gewindebuchsen 19 synchron über einen nicht dargestellten Verstellmotor oder manuell verdreht werden können. In der Praxis wird die optimale Einstellung der Querbrücke 17 zu den Führungssäulen 13 und damit die untere Endlage des Tisches 12 durch Versuche ermittelt. Man verstellt die Querbrücke 17 so lange nach unten, bis gute Stanzergebnisse erzielt werden.

Figur 2 zeigt die Probleme bei dieser bekannten Verstelleinrichtung 16, die im vorhandenen Spiel 24 zwischen den Gewinden und dem Spiel 25 zwischen Bund 20 und Querbrücke 17 bzw. Haltering 21 aus funktionellen Gründen vorhanden sein muss. Dieses Spiel liegt zwar im Bereich von wenigen 1/10 Millimetern, doch genügt dieses, um sich nachteilig auf das Stanzen und die Haltbarkeit des Stanzwerkzeuges 10 auszuwirken. Bedingt durch das Gewicht von Querbrücke 17 und Stanzwerkzeug 10 sowie Teilen des Antriebes 14 ist das Spiel 24, 25 einseitig, wie in Figur 2 links dargestellt, verteilt.

Beim Stanzvorgang bewirkt die Stanzkraft, dass die Querbrücke 17 höhenmäßig nach oben belastet wird und sich dadurch das Spiel 24, 25 auf die andere Seite verschiebt, wie es in Figur 2 rechts dargestellt ist. Das bedeutet, dass nach dem Durchtrennen der auszustanzenden Formteile 3 das ganze Gewicht der nach oben gedrückten Teile auf der Schnittlinie 11 ruht. Es hat sich gezeigt, dass dies zu einer minimalen Deformation der Schneide führt, die eine Bildung von sogenannten Engelhaaren sowie von staubförmigen Partikel zur Folge hat.

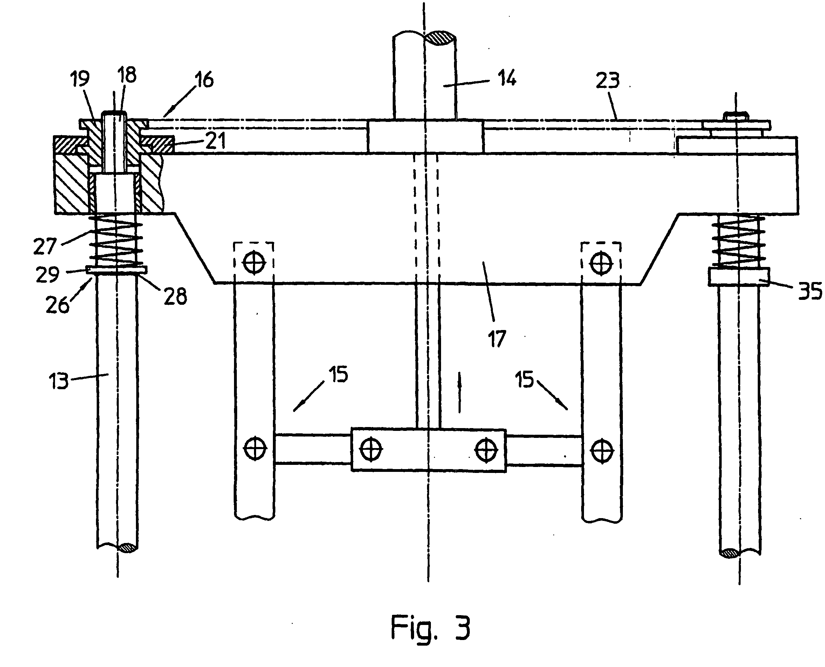

Um diesen Effekt zu vermeiden, wird gemäß einer ersten Ausführungsform - wie aus Figur 3 ersichtlich - an mindestens zwei, vorzugsweise an allen Führungssäulen 13, eine Abstützung 26 angebracht, auf der sich ein Federelement in Form einer Schraubenfeder 27 abstützt. Die Schraubenfeder 27 drückt gegen die Querbrücke 17, und zwar mit einer Kraft, die in allen Stellungen der Querbrücke 17 höher ist als das Gewicht der Querbrücke 17 einschließlich angebauten Teilen, so dass das Spiel 24, 25 auf die in Figur 2 rechts dargestellte Lage verschoben wird. Damit löst der Stanzvorgang selbst keine Spielverlagerung aus und es ist eine starre Lage der Verstelleinheit gegeben. Indem Schraubenfedern 27 mit großem Federweg gewählt werden wirken dieses auch bei einer entsprechenden Lageveränderung der Querbrücke 17 zu den Führungssäulen 13 mit ausreichender Federkraft, um dem Gewicht entgegen zu wirken.

Als Abstützung kann auf einfache Weise eine über einen Sicherungsring 28 gehaltene Scheibe 29 dienen. Auch durch einen einfachen Absatz oder Bund 30 - wie in Figur 3 an der rechten Führungssäule 13 gezeigt - ist diese Auflage auf einfache Weise herstellbar.

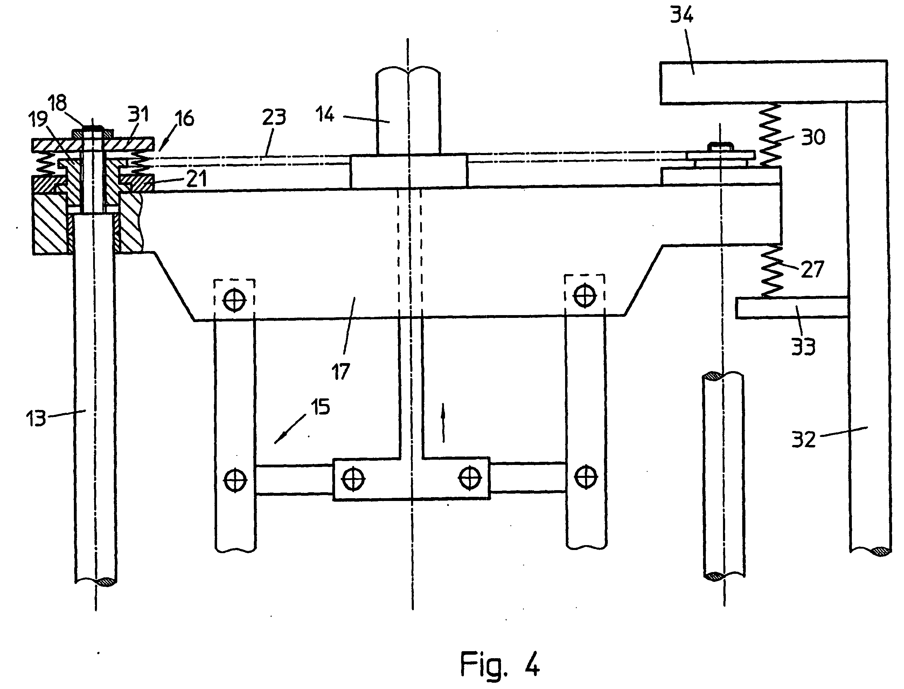

Eine zweite Ausführungsform - in Figur 4 links dargestellt - zeigt eine Lösung mit Zugfedern 30, mit der denselben Effekt erzielt wird. Hierzu wird am oberen Ende von mindestens zwei oder allen Führungssäulen 13 eine Platte 31 befestigt, an der die Zugfedem 35 einerseits angelenkt sind, während sie andererseits an der Querbrücke 17 befestigt sind.

Figur 4 rechts zeigt eine Variante der Anordnung der Druckfedern 27 bzw. Zugfedern 30 in der Weise, dass diese einerseits am ortsfesten Gestell 32 angelenkt sind, andererseits an der Querbrücke 17 wirken. So stützen sich die Druckfedem 27 an der mit dem Gestell 32 verbundenen Traverse 33 ab, die Zugfedern 30 sind am Querträger 34 befestigt, der ebenfalls Teil des Gestelles 32 ist.

## Patentansprüche

1. Stanzstation zum Austrennen von Teilen (3) aus thermoplastischem Kunststoff mit einem höhenverschiebbaren, an Führungssäulen (13) geführten Tisch (12) zur Aufnahme eines Stanzwerkzeuges (10) und einer die Führungssäulen (13) an deren oberen Ende über eine Schraubverbindung verbindenden Querbrücke (17) mit daran befestigtem Antrieb (15) zur Verschiebung des Tisches (12), sowie mit einer Verstelleinrichtung (16) zwischen Querbrücke (17) und jeder Führungssäule (13) zur Veränderung der Lage beider Teile zueinander, bei der zwischen der Querbrücke (17) und mindestens zwei Führungssäulen (13) oder dem ortsfesten Gestell (32) Federelemente (27, 30) angeordnet sind, die entgegen des Eigengewichts der Querbrücke (17) wirksam sind und direkt an dieser angreifen, wobei das obere Ende einer jeden Führungssäule (13) einen Gewindezapfen (18) aufweist, auf dem eine Gewindebuchse (19) mit einem Bund (20) sitzt, der sich einerseits auf der Querbrücke (17) abstützt und der andererseits von einem an der Querbrücke (17) montierten Haltering (21) abgestützt wird.

2. Stanzstation nach Anspruch 1, **dadurch gekennzeichnet, dass** als Federelemente Druckfedern (27) eingesetzt sind, die sich an einer Führungssäule (13) oder am Gestell (32) abstützen und gegen die Querbrücke (17) drücken.

3. Stanzstation nach Anspruch 2, **dadurch gekennzeichnet, dass** sich jede Druckfeder (27) auf einer Scheibe (29) abstützt, die von einem Sicherungsring (28) auf der Führungssäule (13) gehalten wird.

4. Stanzstation nach Anspruch 2, **dadurch gekennzeichnet, dass** die Führungssäulen (13) einen Absatz oder Bund (35) aufweisen, auf dem sich die Druckfeder (27) abstützt.

5. Stanzstation nach Anspruch 1, **dadurch gekennzeichnet, dass** als Federelemente Zugfedem (30) eingesetzt sind, die zwischen einer an der Oberseite der Führungssäulen (13) angeordneten Platte (13) oder zwischen dem Gestell (32) und der Querbrücke (17) angeordnet sind.

## Claims

1. A punching station for punching out parts (3) of thermoplastic polymer, with a height-adjustable table (12) that is guided on guide columns (13) and serves for accommodating a punching tool (10), with a transverse bridge (17) that connects the upper ends of the guide columns (13) with the aid of screw connections, with a drive (15) that serves for displacing the table (12) and is mounted on the transverse bridge, and with an adjusting device (16) between the transverse bridge (17) and each guide column (13) in order to change the relative position between the two respective parts, wherein spring elements (27, 30) are arranged between the transverse bridge (17) and at least two guide columns (13) or the stationary frame (32), wherein said spring elements act against the dead weight of the transverse bridge (17) and directly engage thereon, wherein the upper end of each guide column (13) contains a threaded stem (18), on which a threaded bushing (19) with a collar (20) is seated, and wherein one side of said collar is supported on the transverse bridge (17) while the other side is supported by a retaining ring (21) mounted on the transverse bridge (17).

2. The punching station according to Claim 1, **characterized in that** the spring elements used consist of pressure springs (27) that are supported on a guide column (13) or on the frame (32) and press against the transverse bridge (17).

3. The punching station according to Claim 2, **characterized in that** each pressure spring (27) is supported on a disk (29) that is held on the guide column (13) by a locking ring (28).

4. The punching station according to Claim 2, **characterized in that** the guide columns (13) contain a shoulder or a collar (35), on which the pressure spring (27) is supported.

5. The punching station according to Claim 1, **characterized in that** the spring elements used consist of tension springs (30) that are arranged between a plate (13) arranged on the upper side of the guide columns (13) and the transverse bridge (17) or between the frame (32) and the transverse bridge.

## Revendications

1. Station de découpage pour la division de pièces (3) en matière thermoplastique, comportant une table (12) déplaçable en hauteur, guidée sur des colonnes de guidage (13), destinée à recevoir un outil de découpage (10), et un pont transversal (17), reliant les colonnes de guidage (13) à leur extrémité supérieure par le biais d'un vissage et où est fixée une propulsion (15) servant à déplacer la table (12), ainsi qu'un dispositif de réglage (16) entre le pont transversal (17) et chaque colonne de guidage (13) afin de modifier la position des deux pièces l'une par rapport à l'autre, dans laquelle station sont disposés, entre le pont transversal (17) et au moins deux colonnes de guidage (13) ou le châssis fixe (32), des éléments à ressort (27, 30) qui sont actifs à l'encontre du poids propre du pont transversal (17) et touchent directement celui-ci, l'extrémité supérieure de chaque colonne de guidage (13) présentant un tourillon fileté (18) sur lequel un manchon fileté (19) repose par un rebord (20) qui s'appuie d'une part sur le pont transversal (17) et qui est d'autre part soutenu par une bague de retenue (21) montée sur le pont transversal (17).

2. Station de découpage selon la revendication 1, **caractérisée en ce qu'**on utilise comme éléments à ressort des ressorts de compression (27) qui s'appuient sur une colonne de guidage (13) ou sur le châssis (32) et appuient contre le pont transversal (17).

3. Station de découpage selon la revendication 2, **caractérisée en ce que** chaque ressort de compression (27) s'appuie sur un disque (29) qui est maintenu par une bague de sûreté (28) sur la colonne de guidage (13).

4. Station de découpage selon la revendication 2, **caractérisée en ce que** les colonnes de guidage (13) présentent un talon ou un rebord (35) sur lequel s'appuie le ressort de compression (27).

5. Station de découpage selon la revendication 1, **caractérisée en ce qu'**on utilise comme éléments à ressort des ressorts de traction (30) qui sont disposés entre une plaque (13) disposée sur le côté supérieur des colonnes de guidage (13) ou entre le châssis (32) et le pont transversal (17).
